**Europäisches Patentamt**

**European Patent Office**

**Office européen des brevets**

(11) Publication number: **0 033 238**
**A2**

# (12) EUROPEAN PATENT APPLICATION

(21) Application number: **81300317.5**

(22) Date of filing: **23.01.81**

(51) Int. Cl.³: **E 02 B 15/04**

(30) Priority: **26.01.80 GB 8002699**

(43) Date of publication of application:
**05.08.81 Bulletin 81/31**

(84) Designated Contracting States:
**BE DE FR GB IT NL SE**

(71) Applicant: **Ashworth, Ian Paul**
**15 Beechwood Court Park Road Chiswick**
**London W4(GB)**

(71) Applicant: **Fish, Hugh Robert Asquith**
**1 Pennywern Road**
**London S.W.5(GB)**

(72) Inventor: **Ashworth, Ian Paul**
**15 Beechwood Court Park Road Chiswick**
**London W4(GB)**

(72) Inventor: **Fish, Hugh Robert Asquith**
**1 Pennywern Road**
**London S.W.5(GB)**

(74) Representative: **Warren, Keith Stanley et al,**
**BARON & WARREN 16 Kensington Square**
**London W8 5HL(GB)**

(54) **A boom element for a flexible floating barrier usable in shallow or tidal waters and a method of containing pollutants in such waters.**

(57) A flexible floating barrier or boom for containing the spread of oil and other pollutants floating in shallow tidal waters comprises a flexible buoyancy tube (1) and two juxtaposed flexible ballast tubes (2). The buoyancy tube is disposed above and intermediate the ballast tubes and is joined in contiguous relation with the latter. The buoyancy tube may be inflated with air or plastics foam material whilst the ballast tubes are filled with water so that the boom floats with the buoyancy tube projecting above the surface of the water and the ballast tubes below the surface. A weighted skirt (4) depends from the buoyancy tube between and below the ballast tubes. In tidal waters, when the tide ebbs, the boom settles onto the sea or river bed in an erect position and the ballast tubes seal against the bed so that polluted water may be contained behind the boom.

Fig.1

## "A BOOM ELEMENT FOR A FLEXIBLE FLOATING BARRIER USABLE IN SHALLOW OR TIDAL WATERS AND A METHOD OF CONTAINING POLLUTANTS IN SUCH WATERS".

The present invention relates to flexible floating barriers or boom assemblies such as are used for controlling and containing the spread of oil and other pollutants floating on water and for recovering floating pollutants. More particularly, the invention relates to a boom element for constructing a flexible floating barrier suitable for controlling and containing the spread of pollutants floating in shallow tidal waters and to permit the recovery of pollutants from such waters.

Known flexible floating barriers for the containment of oil pollution and for assisting in the removal of such pollution may comprise one or more tubular buoyancy chambers or buoyancy tubes inflated with air or filled with foam and one or more tubular ballast chambers or ballast tubes disposed below the buoyancy tubes, in generally parallel relationship with the latter, and inflated or filled with water. The tubes are made from flexible material, such as neoprene or PVC coated synthetic fibre fabric or other rubberized fabric. The floating barrier may be constructed in a single length or may be assembled from separate boom elements, each of which comprises buoyancy and ballast tubes, joined together in a line to form a barrier of desired length. When the buoyancy tubes are inflated with air or foam and the ballast tubes are inflated with water, the barrier floats on water, partly above and partly below the water surface, so as to impede the spread of pollution. During use, it may be necessary to pump air and water continually to the respective tubes of the barrier. Typical examples of such barriers are described in UK Patent Specifications Nos. 1188156 and 1552642.

Flexible floating barriers are also known which comprise a buoyancy tube supporting a depending, weighted skirt for impeding the escape of pollutants beneath the floating part of the barrier and an example of this type of barrier is described in UK Patent Specification 1379156.

Hitherto, floating anti-pollution barriers have been designed to prevent the spread of pollutants in deep water where the barrier remains floating. However, spillage or accidental discharge of pollutants often occurs from or near the shore in shallow or tidal waters where the sea or river bed or bottom may be exposed when the tide ebbs. In such waters, a barrier may settle onto the bottom and it has been found that hitherto known barriers fail to contain floating pollutants under these conditions owing to their inability to remain erect and to seal to the sea or river bottom, mud flats and undulating surfaces exposed at low tide or in depths of water which are less than the draft of the barrier.

It is an object of the present invention to provide a boom element for a flexible floating barrier which alleviates the problems experienced with known boom or barrier constructions when used in shallow waters and which is particularly designed for use in shallow and/or tidal waters but which functions as a normal floating barrier in deeper water.

The invention consists in a boom element for a flexible floating barrier, comprising one or more flexible buoyancy tubes and one or more flexible ballast tubes disposed below the buoyancy tube(s) in generally mutually parallel relationship with the latter, characterized by a plurality of juxtaposed ballast tubes for containing ballast liquid and closable to retain the ballast liquid therein, the or each buoyancy tube being disposed in a position above and intermediate two adjacent ballast tubes and in contiguous relation therewith.

Preferably, the boom element comprises a single buoyancy tube and two ballast tubes. Moreover, it may include at least one depending, weighted skirt extending below the ballast tubes. In the preferred embodiment, this weighted skirt depends from the buoyancy tube and extends between the two ballast tubes.

To prevent the ballast tubes from becoming over-pressurized and consequently damaged when the boom settles onto an undulating sea or river bed or extends onto a sloping river bank, vent means may be provided for venting air and liquid from the ballast tubes in response to the occurrence of predetermined excess pressure within the tubes. Such vent means may comprise vent pipes, via which the ballast tubes may also be filled with ballast liquid, each vent pipe communicating with a ballast tube and projecting about an associated buoyancy tube and having an inlet end adjacent the upper side of the buoyancy tube, whereby the inflated buoyancy tube may constrict and at least partially close the vent pipe.

The ballast tubes contribute to the ballasting of the boom element in deep water and, in shallow water of insufficient depth to float the boom, they settle onto the bottom in substantially sealing relationship therewith. The ballast tubes change in shape as they settle onto the bottom and, particularly on mud or silty bottoms provide a large surface area of contact with the bottom. The configuration of the boom element presents an efficient barrier resisting the pressure of polluted water trapped within the confines of the barrier, as water on the outside of the barrier recedes, and effectively contains the polluted water. Moreover, the configuration of the boom provides a stabilizing effect which supports the boom in an erect or upright position and prevents it from rolling over. Tests in locations where spar grass, reeds and other water-reed grow show that the invention also produces a satisfactory barrier preventing the escape of polluted water in such locations.

When the invention is to be used for containing and recovering oil or other pollutants floating in shallow tidal waters, the flexible boom element, or the barrier assembled from a series of such boom elements, is floated onto the water, when there is sufficient depth for this purpose. As the barrier is deployed, ballast liquid is pumped into the ballast tubes and the or each buoyancy tube is inflated, for example, with air. The resulting barrier is then floated into position about the pollution and may be arranged, for example, to trap the pollution against the shore by having its opposite ends anchored on the shore. It may also be anchored at other locations along its length to maintain it in position as the tide ebbs. As the tide ebbs, the ballast tubes settle onto the sea or river bottom and the water ballast causes these tubes to follow contour changes in the bed and sealingly engage the barrier with the latter. Hence, the polluted water is trapped or dammed within the confines of the barrier, so that it can be removed, and cannot escape with the ebbing tide.

The invention also consists in a novel method of containing oil or other pollution floating in tidal water or other water of varying depth, which comprises the steps of floating a flexible barrier on the water when there is sufficient depth of water available for this purpose, said barrier having one or more chambers forming and extending along at least a bottom part of the barrier, introducing ballast liquid into the or each chamber to ballast the barrier, closing the or each chamber, disposing the barrier in a position about a polluted area of water, maintaining the barrier in said position as the water recedes, permitting the barrier to settle onto the bottom as the water recedes, said barrier remaining erect and said ballast liquid causing the barrier to follow contour changes of the bottom and engage the barrier in substantially sealing relationship therewith, and thereby retaining the pollution within the confines of the barrier.

The method of this invention may be practised with a boom element or barrier comprising a single tubular chamber into which gas or air is admitted for buoyancy purposes and liquid for ballasting purposes. The liquid occupies the bottom portion of the tubular chamber and, in addition to ballasting the tube, causes the tube to function in accordance with the principles of this invention.

In order that the invention may be more readily understood, reference will now be made to the accompanying drawings, in which:-

Fig. 1 is a perspective view of a flexible boom element constructed in accordance with the invention,

Fig. 2 is a cross-section, taken along the line II-II of Fig. 1, through a flexible floating barrier assembled from boom elements constructed as shown in Fig. 1 and illustrating the barrier floating in deep water, and

Fig. 3 is a cross-sectional view similar to Fig. 2 illustrating the barrier settled on a sea or river bed or bottom when the tide has ebbed.

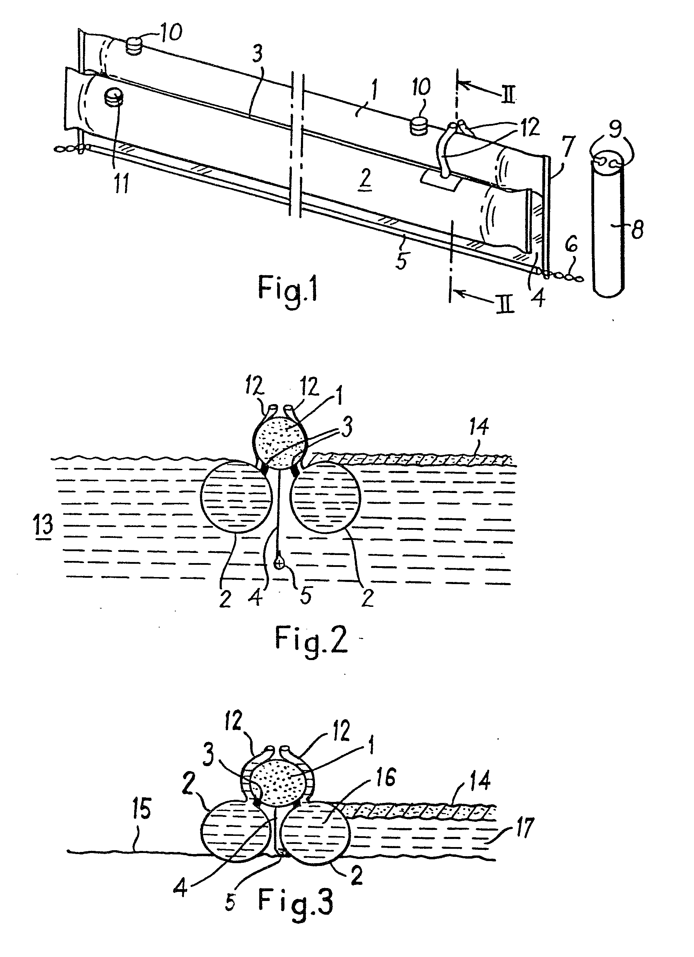

Referring to Fig. 1 of the drawings, the boom element comprises a flexible, closed buoyancy tube 1 and two flexible, closed ballast tubes 2 juxtaposed below the buoyancy tube and disposed in generally parallel relationship therewith. The buoyancy tube 1 is positioned intermediate the two ballast tubes so that the latter are spaced apart and symmetrically disposed towards opposite sides of the buoyancy tube. The ballast tubes are substantially the same length as the buoyancy tube and are contiguous with the buoyancy tube, via webs 3, substantially throughout their full lengths. The buoyancy and ballast tubes may be made from a plastics coated woven fabric, for example, a PVC coated nylon fabric, although a wide range of other natural or synthetic coatings and fabrics can be utilized. They may be formed from sheets of the fabric material so that the ballast tubes are integral with the buoyancy tube.

Depending from the bottom of the buoyancy tube 1 and extending between and below the ballast tubes 2 is a flexible skirt 4 which may be formed integrally with the buoyancy tube. A hem 5 is formed along the bottom edge of the skirt and a metal chain 6 is secured within this hem. The chain serves to weight the skirt. Moreover, in a boom assembly or barrier, it is shackled to the chains of similar adjacent boom elements and serves to resist any tensile forces to which the barrier may be subjected and which might otherwise cause damage to the barrier. Suitable anchors may also be shackled to the chain 6 for the purposes of anchoring the barrier in position. At opposite ends, the boom element is provided with connecting rods 7 which are clamped to the ends of the buoyancy tube 1 and skirt 4 and also serve to stiffen the latter. The boom element is coupled to the adjacent end of a similar boom element by a connecting piece 8 having keyhole slots 9 extending along opposite sides. This connecting piece is slid over the connecting rods 7 at the adjacent ends of the boom elements in order to engage the rods in the slots and couple the boom elements together.

The buoyancy tube 1 is inflatable with air via valves 10, whilst the ballast tubes 2 may be inflated or filled with water either through valves 11 or vent pipes 12. The valves 10 and 11 may also be opened to permit discharge of air and water from the tubes when the boom element is to be collapsed. The vent pipes 12 extend upwardly from the ballast tubes about the surface of the buoyancy tube and, before the latter is fully inflated, each ballast tube may readily be inflated by connecting a water pump to the vent pipes. However, when the buoyancy tube is fully inflated, the air pressure within the buoyancy tube closes the vent pipes 12 and forms a pressure release valve which ensures that the water in the ballast chambers is not over-pressurized, with resultant damage to the ballast tubes, when the boom element settles, for example, onto an undulating bottom or sloping river bank. When the pressure within the ballast tubes exceeds a pressure predetermined by the inflation pressure within the buoyancy tube and closing the vent pipes, air and/or water may be discharged through the vent pipes to relieve the excess pressure.

In use, the boom element is connected in series with a plurality of similar boom elements in order to form a flexible floating barrier of required length. This barrier is particularly suitable for containing the spread of oil or other pollutants floating on water adjacent a shoreline in shallow tidal waters. The barrier is inflated and floated into the required position whilst the tide is high and there is a sufficient depth of water for this purpose. Opposite ends of the barrier may extend and be anchored onto a shore or river bank, whilst anchors may be attached to the barrier at spaced locations along its length to anchor the floating part in position. When the barrier is floating in deep water 13, it acts as a normal boom to contain oil trapped within the confines of the barrier. As shown in Fig. 2, the barrier floats with the buoyancy tube 1 projecting above the surface of the water and the ballast tubes 2 below, whereby to impede the escape of the floating oil 14. The weighted skirt 4 depending from the buoyancy chamber serves as an additional obstacle to escape of oil beneath the barrier. At its opposite ends connected to the shore and, when the tide ebbs, the barrier settles onto the sea or river bottom 15. When this occurs, the ballast water 16 remains within the ballast tubes to maintain the barrier erect. It causes the barrier to follow contour changes of the bottom and urges the ballast tubes 2 into engagement with the bottom 15 to form an effective seal which prohibits the escape of polluted water 17 dammed within the confines of the barrier. As and when convenient, the oil pollution retained by the barrier may be recovered or removed. The boom elements are able to change in shape as the ballast tubes 2 settle onto the bottom 15 and, particularly on mud and silt, provide a large surface area contact on each side of the skirt. The vent pipes 12 normally prevent escape of water from within the ballast tubes but ensure that they cannot become overpressurized.

Whilst a particular embodiment has been described, it will be understood that modifications can be made without departing from the scope of the invention, as defined by the appended claims. For example, although air and water are the preferred materials for inflating the buoyancy and ballast tubes, respectively, because these fluids are the most readily available, other gases and liquids may be utilized and the buoyancy tube may alternatively or additionally be filled with the plastics foam, plastics spheres or other materials for providing or assisting buoyancy.

CLAIMS

1. A boom element for a flexible floating barrier, comprising one or more flexible buoyancy tubes (1) and one or more flexible ballast tubes (2) disposed below the buoyancy tube(s) in generally mutually parallel relationship with the latter, characterized by a plurality of juxtaposed ballast tubes (2) for containing ballast liquid and closable to retain the ballast liquid therein, the or each buoyancy tube (1) being disposed in a position above and intermediate two adjacent ballast tubes and in contiguous relation therewith.

2. A boom element according to claim 1, characterized by a single buoyancy tube and two ballast tubes.

3. A boom element according to claim 1 or 2, characterized by at least one depending, weighted skirt (4) extending below the ballast tubes.

4. A boom element according to claim 3, characterized in that a skirt (4) depends from the or each buoyancy tube and extends between the associated ballast tubes.

5. A boom element according to any preceding claim, characterized by means (12) for venting air and liquid from the ballast tubes (2) in response to the occurrence of a predetermined excess pressure within the ballast tubes.

6. A boom element according to claim 5, characterized in that the venting means comprises vent pipes (12), via which the ballast tubes may be filled with ballast liquid, communicating with the ballast tubes, each vent pipe projecting about the associated buoyancy tube and having an inlet end adjacent the upper side of the buoyancy tube.

7. A boom element according to any preceding claim, characterized by connecting means (7, 8) at opposite ends of the element for connecting the latter to the end of an adjacent similar boom element.

8. A method of containing oil or other pollution floating in tidal water or other water of changing depth, comprising the steps of:-

(a) floating a flexible barrier on the water when there is a sufficient depth of water available for this purpose, said barrier having one or more chambers (2) extending along at least a bottom part of the barrier,

(b) introducing ballast liquid into the or each chamber (2) to ballast the barrier,

(c) closing the or each chamber,

(d) deploying the barrier in a position about the polluted area of water,

(e) maintaining the barrier in said position as the water recedes,

(f) permitting the barrier to settle onto the bottom as the water recedes, said barrier remaining erect and said ballast liquid causing the barrier to follow contour changes of the bottom and engaging the barrier in substantially sealing relationship therewith, and

(g) thereby retaining the pollution within the confines of the barrier.

9. A method according to claim 8, characterized by the step of automatically discharging water from the or each chamber in response to the occurrence of a predetermined excess pressure within the chamber upon settlement of the barrier on the bottom.

Fig.1

Fig.2

Fig.3

0033238